# EUROPEAN PATENT SPECIFICATION

(11) **EP 1 360 029 B1**
(45) Date of publication and mention of the grant of the patent: **12.08.2009**
(21) Application number: 02710834.9
(22) Date of filing: 31.01.2002
(51) Int. Cl.: B23K 35/02, B23K 35/28, C25D 5/12, B32B 15/01

(54) **BRAZING PRODUCT**
HARTLÖTPRODUKT
PRODUIT DE BRASAGE

(30) Priority: 02.02.2001 EP 01200400; 29.05.2001 EP 01202025
(43) Date of publication of application: 12.11.2003
(73) Proprietor: Aleris Aluminum Koblenz GmbH, 56070 Koblenz (DE)
(72) Inventor: WITTEBROOD, Adrianus, Jacobus, NL-1991 HB Velserbroek (NL); WIJENBERG, Jacques, Hubert, Olga, Joseph, NL-1019 PE Amsterdam (NL); MOOIJ, Joop, Nicolaas, NL-1902 JP Castricum (NL)
(74) Representative: Müller, Frank Peter
(86) International application number: PCT/EP2002/001117
(87) International publication number: WO 2002/060639

(56) References cited:
- WO-A-00/71784
- US-A- 3 489 657

## Description

### FIELD OF THE INVENTION

The invention relates to a brazing product, such as a brazing sheet product, comprising an aluminium layer being made of an aluminium alloy comprising silicon in an amount in the range of 2 to 18% by weight, and a further layer comprising nickel on the outer surface of said AlSi-alloy layer, wherein taken together said aluminium layer and all layers exterior thereto form a filler metal for a brazing operation as defined in present claims 1 and 14. The invention also relates to a method of manufacturing a brazed assembly using this brazing product, and to a brazed assembly comprising at least one component made of this brazing product.

### DESCRIPTION OF THE RELATED ART

Aluminium and aluminium alloys can be joined by a wide variety of brazing and soldering processes. Brazing, by definition, employs a filler metal or alloy having a liquidus above 450°C and below the solidus of the base metal. Brazing is distinguished from soldering by the melting point of the filler metal: solders melt below 450°C. Soldering processes are not within the field of the present invention.

Brazing products, and in particular brazing sheet products, find wide applications in heat exchangers and other similar equipment. Conventional brazing sheet products having a core or base sheet, typically an aluminium alloy of the Aluminium Association (AA)3xxx-series, having on at least one surface of said core sheet clad an aluminium clad layer, the aluminium clad layer being made of an AA4xxx-series alloy comprising silicon in an amount in the range of 2 to 18% by weight, and preferably in the range of 7 to 14% by weight. The aluminium clad layer may be coupled to the core or base alloy in various ways known in the art, for example by means of roll bonding, cladding, explosive cladding, thermal spray-forming or semi-continuous or continuous casting processes.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the NOCOLOK (trade mark) brazing flux. Vacuum brazing is an essentially discontinuous process and puts high demands on material cleanliness. The disruption of the oxide layer present is mainly caused by the evaporation of magnesium from the clad alloy. There is always more magnesium present in the furnace than necessary. The excess magnesium condenses on the cold spots in the furnace and has to be removed frequently. The capital investment for suitable equipment is relatively high.

CAB requires an additional process step prior to brazing as compared to VB, since a brazing flux has to be applied prior to brazing. A brazing flux for use in brazing aluminium alloys usually consist of mixtures of alkali and alkaline earth chlorides and fluorides, sometimes containing aluminium fluoride or cryolite. CAB is essentially a continuous process in which, if the proper brazing flux is being used, high volumes of brazed assemblies can be manufactured. The brazing flux dissolves the oxide layer at brazing temperature allowing the clad alloy to flow properly. When the NOCOLOK flux is used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. Unfortunately the brazing flux after drying can easily fall off due to small mechanical vibrations. During the brazing cycle, corrosive fumes such as HF are generated. This puts a high demand on the corrosion resistance of the materials applied for the furnace.

Ideally, a material should be available that can be used for CAB but does not have the requirements and defects of the known brazing flux application. Such a material can be supplied to a manufacturer of brazed assemblies and is ready to use directly after forming of the assembly parts. No additional brazing fluxing operations have to be carried out. Presently, only one process for fluxless brazing is used on an industrial scale. The material for this process can be for example standard brazing sheet made from an AA3xxx-series core alloy clad on one or both sides with a cladding of an AA4xxx-series alloy. Before the brazing sheet can be used the surface has to be modified in such a way that the naturally occurring oxide layer does not interfere during the brazing cycle. The method of achieving good brazing is to deposit a specific amount of nickel on the surface of the clad alloy. If properly applied, the nickel reacts, presumably exothermically, with the underlying aluminium. The nickel can be applied by using a shim of nickel between the two parts to be joined or can be deposited by electroplating. When electroplating is used the adherence of the nickel should be sufficient to withstand typical shaping operations being used in for example heat exchanger manufacture.

Processes for nickel-plating in an alkaline solution of aluminium brazing sheet are known from each of US-A-3,970,237, US-A-4,028,200, US-A-4,164,454, and SAE-paper no. 880446 by B.E. Cheadle and K.F. Dockus. According to these documents, nickel or cobalt, or combinations thereof, are most preferably deposited in combination with lead. The lead addition is used to improve the wetteability of the aluminium clad alloy during the brazing cycle. An important characteristic of these plating processes is that the nickel is preferentially deposited on the silicon particles of the aluminium clad alloy. To obtain sufficient nickel for brazing, the surface of the aluminium clad alloy should contain a relatively large number of silicon particles to act as nuclei for the nickel deposition. It is believed that to obtain sufficient nucleation sites a part of the aluminium in which the silicon particles are embedded should be removed by before pickling chemical and/or mechanical pre-treatment. This is believed a necessary condition to obtain sufficient nickel coverage to serve as nuclei for the plating action of the brazing or clad alloy. On a microscopic scale the surface of the Si-containing cladding of the brazing sheet is covered with nickel globules. However, the use of lead for the production of a suitable nickel and/or cobalt layer on brazing sheet has several disadvantages. The use of lead for manufacturing products, such as automotive products, is undesirable and it is envisaged that in the very near future there might possibly even be a ban on lead comprising products or products manufactured via one or more intermediate processing steps comprising lead or lead-based components.

In the international PCT patent application no. WO-00/71784, J.N. Mooij et al*.* disclose a brazing sheet product and a method of its manufacture, in this brazing sheet product there is provided a bonding layer, preferably applied by plating, comprising zinc or tin between the AlSi-alloy clad layer and the nickel layer in order to improve the bonding of the nickel layer. The addition of lead to the nickel layer has been replaced by the addition of bismuth while maintaining the excellent brazeability characteristics of the brazing sheet product.

A drawback of the known brazing sheet products having a layer comprising nickel is the limited corrosion life of brazed products in a SWAAT-test in accordance with ASTM G-85. Corrosion lifetimes without perforations are typically in the range of 5 to 7 days and thereby restricting possible useful applications of the brazing product. For several applications of the known nickel-plated brazing sheet in brazed products such a relatively short corrosion lifetime is not detrimental. However, a good corrosion resistance is a valuable property for brazing products used in amongst others heat exchangers, such as radiators, condensers and oil coolers. These heat exchangers are exposed to a severe external corrosive attack by e.g. de-icing road salt. Long-life alloys are considered herein as those, which in the SWAAT-test without perforations according to ASTM G-85 exceed 10 to 12 days.

### SUMMARY OF THE INVENTION

It is an object of the present invention to provide a Ni-plated brazing product for use in a brazing operation, ideally a fluxless CAB brazing operation, and wherein the brazing product has an improved post-braze corrosion resistance when measured in a SWAAT-test in accordance with ASTM G-85.

It is another object of the present invention to provide a brazing sheet product comprising a core sheet made of an aluminium alloy coupled on at least one surface of said core sheet to an aluminium clad layer, the aluminium clad layer being made of an aluminium alloy comprising silicon in an amount in the range of 2 to 18% by weight, and a further layer comprising nickel on the outer surface of said aluminium clad layer such that taken together said aluminium clad layer and all layers exterior thereto form a filler metal for a brazing operation, and wherein the brazing sheet product has an improved corrosion resistance when measured in a SWAAT-test in accordance with ASTM G-85.

It is a further object of the present invention to provide a brazing product, ideally a brazing sheet product, having had a corrosion life of 12 days or more in a SWAAT-test without perforations in accordance with ASTM G-85.

It is a further object of the present invention to provide a method of manufacturing brazed assemblies using the brazing product.

In accordance with the invention in one aspect there is provided a brazing product comprising an aluminium clad layer made of an aluminium alloy comprising silicon in an amount in the range of 2 to 18% by weight, preferably 7 to 14%, and a layer comprising nickel on the outer surface of said AlSi-alloy layer, wherein taken together said AlSi-alloy layer and all layers exterior thereto form the filler metal for a brazing operation as defined in present claim 1. This product is characterised in that the filler metal has a composition further comprising at least one element with a smaller exchange current density for the Hydrogen Evolution Reaction ("HER") than nickel, and whereby the mol-ratio of Ni to the total of all said at least one element is in the range of 10:(0.3 to 30).

By the addition of the alloying elements to the filler metal in the appropriate mol-ratio an improved corrosion performance is being obtained of the brazing product in a post-braze condition. In the brazing product according to the invention corrosion lifetimes without perforations according to ASTM G-85 exceed 8 days. By selection of the mol-ratio's a corrosion life of more than 12 days can be obtained, resulting in that the desired long-life properties are being achieved. In the best examples a corrosion life without perforations of more than 20 days has been reached. The product can be fluxless brazed under controlled atmosphere conditions while achieving very good corrosion performance enhancing the possibilities of application of the Ni-plated brazing product.

The invention is based in part on the insight that it is believed that the cathodic reaction governs the overall corrosion rate of Ni-plated brazing products when tested in the SWAAT-test in accordance with ASTM G-85. It is speculated that the cathodic reaction in this system appears to be the Hydrogen Evolution Reaction ("HER"). When nickel plated brazing products such as brazing sheets are being subjected to a brazing operations, typically a fluxless CAB operation, small Ni-aluminide particles are being formed which are believed to catalyse the HER. By the addition of one or more elements in a sufficient amount to the metal filler and having a lower exchange current density for the HER as compared to nickel-aluminides the catalyse effect is reduced and the corrosion performance of the brazed product is being improved remarkably.

From the textbook "Instrumental Methods in Electrochemistry", Southampton Electrochemistry Group, Ellis Horwood Limited, 1990, Table 7.1 several exchange current densities as given for the HER in 1M H₂SO₄, for example as shown in present Table A.

**Table A.**

| **Element** | **-log i₀ / A cm⁻²** |
|---|---|
| Ni | 5.2 |
| Bi | 7.8 |
| In | 9.5 |
| Sn | 8.0 |
| Zn | 10.5 |

Various alloying elements in an aluminium alloy may be used for the purpose of improving the corrosion performance of the brazing products in the post-braze condition. The elements, taking into account that such elements have to be added to the aluminium clad layer, and/or to the Ni comprising layer, and/or as separately applied layer as metal or alloy, are elements selected from the group comprising tin, bismuth, zinc, silver, indium, lead, cadmium, antimony, magnesium and gallium.

A more preferred lower-limit for the mol-ratio of Ni to such alloying element or elements is 10:0.5, thereby improving the corrosion life of the brazed product. When the mol-ratio is too low no significant effect on the corrosion life may be found. A more suitable upper-limit for the mol-ratio of Ni to such alloying element or elements is 10:20, and preferably 10:15, and more preferably 10:9. Thereby improving corrosion life of the brazed product.

In another aspect of the invention there is provided a brazing product comprising an aluminium layer being made of an aluminium alloy comprising silicon in an amount in the range of 2 to 18% by weight, and a layer comprising nickel or nickel-alloy on the outer surface of said aluminium layer, wherein taken together said aluminium layer and all layers exterior thereto form the filler metal for a brazing operation as defined in claim 14. This product is characterised in that the filler metal has a composition containing copper which is an element having an electro-chemical potential such that the electro-chemical potential difference between Ni-aluminides particles and the aluminium alloy matrix of the filler composition is reduced relative to an aluminium alloy matrix from a composition which is the same as the filler composition except for lacking copper , and wherein the mol-ratio of Ni to said element is in the range of 10:(0.5 to 9). The reduction in electro-chemical potential is made against the known Ni-plated brazing product having a AlSi clad layer, e.g. AA4045 alloy, having no other alloying elements other than silicon, and further having a layer of Ni, Ni-Pb or Ni-Bi alloy.

By the addition of the alloying elements to the filler metal in the appropriate mol-ratio an improved corrosion performance of the product is being obtained in a post-braze condition. In the brazing product according to the invention corrosion lifetimes without perforations according to ASTM G-85 exceed 8 days. By a selection of the mol-ratio's a corrosion life of more than 12 days can be obtained, resulting in that the desired long-life properties are being achieved. In the best examples a corrosion life without perforations of more than 20 days has been reached. The product can be fluxless brazed under controlled atmosphere conditions while achieving very good corrosion performance enhancing the possibilities of application of this Ni-plated brazing product.

This aspect of the invention is based in part on the insight that the electro-chemical potential difference between Ni-aluminides particles formed during a brazing operation in the filler metal and the surrounding aluminium alloy matrix is too large and resulting in a poor corrosion performance of the brazed product when tested in the SWAAT-test in accordance with ASTM G-85. For this invention the term Ni-aluminides particles is used to denote AlₓNi_{y}-particles such as, but not limited thereto, NiAl₃, Al₆Ni₃Si, and Al₂Ni₂Si. This potential difference could be reduced by the addition of copper as alloying element to the filler metal resulting in an improved corrosion life. Copper as an alloying element is used successfully for this purpose.

A more preferred lower-limit for the mol-ratio of Ni to such alloying element or elements are 10:0.5, and thereby improving the corrosion life of the brazed product. When the mol-ratio is too low no significant effect on the corrosion life may be found. A more suitable upper-limit for the mol-ratio of Ni to such alloying element or elements is 10:20, and preferably 10:15, and more preferably 10:9. Thereby improving the corrosion life of the brazed product. When the mol-ratio is too large the corrosion life in a SWAAT-test may even be adversely affected.

In the embodiment where copper is being used to improve the corrosion life of the nickel-plated brazing product, the mol-ratio of Ni:Cu in the filler metal is in the range of 10:(0.5 to 9), and more preferably in the range of 10:(0.5 to 5). It has been found that the addition of too high amounts of Cu to the filler metal has a strong adverse affect on the corrosion life-time of the brazing product. In addition high amounts of Cu may result in the reduction of the melting temperature of the filler metal.

In the embodiment where tin is being used to improve the corrosion life of the nickel-plated brazing product, the mol-ratio of Ni:Sn in the filler metal is preferably in the range of 10:(0.5 to 9), and more preferably in the range of 10:(0.5 to 6). The addition of tin, preferably as a seperately applied layer for example on top of the outersurface of the nickel comprising layer, may lead to a post-braze corrosion life of more than 12 days without perforations in the SWAAT-test according to ASTM G-85, and in the best examples even 20 days or more without perforations. A further advantage of having a seperately applied tin layer on top of the applied nickel comprising layer is that the tin may work as a solid but soft lubricant in forming operations of the brazing product prior to adding it is an assembly. When too much tin is present in the filler metal the brazeability of the product is adversely affected.

In the embodiment where zinc is being used to improve the corrosion life of the nickel-plated brazing product, the mol-ratio of Ni:Zn in the filler metal is preferably in the range of 10:(0.5 to 15), and more preferably in the range of 10:(0.5 to 8). The addition of zinc, preferably as a seperately applied layer for example on top of the outersurface of the nickel comprising layer or added to the AlSi alloy clad layer, may lead to a post-braze corrosion life of more than 10 days without perforations in the SWAAT-test according to ASTM G-85, and in the best examples even 15 days or more without perforations. A further advantage of having a seperately applied zinc layer on top of the applied nickel comprising layer is that the zinc may work as a solid lubricant for forming operations of the brazing product prior to adding it is an assembly.

A preferred embodiment of the brazing product in accordance with the invention is characterised in that one or more separate layers comprising one or more of said elements in an amount such that in the filler metal the mol-ratio of Ni to said element(s) is in the range of 10: (0.3 to 30) being deposited by plating, preferably by means of electroplating. However, other techniques such as roll bonding, thermal dipping, thermal spraying, plasma spraying, Chemical Vapour Deposition ("CVD") and Physical Vapour Deposition ("PVD") or other techniques for depositing of metals or metal alloys from a gas or vapour phase may be used. Additional plated metal layers can be applied in an industrial scale plating line. It has been found that the thin separate metal layers have no detrimental effect on the adhesion of the nickel comprising layer. Furthermore, it has been found that such separate metal layers melt very easily and fast and do not adversely affect the brazeability of the brazing product. Furthermore, such layers are sufficiently resistant to the formation of oxide formation during the heating up in a brazing cycle.

In an embodiment the brazing product is elongated aluminium alloy stock, e.g. aluminium alloy sheet or strip, aluminium alloy wire or aluminium alloy rod.

An AA4xxx-series aluminium alloy sheet or strip having Si as the most important alloying element in the range of 2 to 18% by weight, more preferably 7 to 14%, can be plated on one or both surfaces with Ni or Ni-alloy, e.g. Ni-Bi alloy, and may be employed in subsequent brazing operations, in particular in an inert atmosphere brazing (CAB) operation in the absence of a brazing-flux material. In the AA4xxx-series alloy other alloying elements may be present to improve specific properties, the balance is made by impurities each up to 0.05 wt.%, total up to 0.20 wt.%, and aluminium. Iron may usually be present as impurity in an amount of up to 0.8 wt.%.

Also, aluminium alloy wire or rods being made of an AA4xxx-series alloy may be plated with a Ni or Ni-alloy layer having 90% or more of nickel, e.g. Ni-Bi alloy, and subsequently employed in a brazing operation, in particular in an inert atmosphere brazing (CAB) operation in the absence of a brazing-flux material, and may also be employed as weld filler wire or weld filler rod in a welding operation.

In a preferred embodiment the brazing product is a brazing sheet product comprising a core sheet made of an aluminium alloy coupled to at least one surface of said core sheet to an aluminium clad layer, the aluminium clad layer being made of an aluminium AA4xxx-series alloy comprising silicon in the range of 2 to 18% by weight, preferably in the range of 7 to 14%, and a layer comprising nickel or nickel-alloy having 90% or more of nickel on the outersurface of said aluminium clad layer such that taken together said aluminium clad layer and all layers exterior thereto form the filler metal for a brazing operation and whereby one or more elements have been added in the appropriate amounts to improve the corrosion performance of the brazing product. Unless otherwise indicated, all percentages in the present specification are weight percents.

In a further embodiment the aluminium alloy clad layer has a thickness ranging from about 2 to 20% of the total thickness of the total brazing product thickness. Typical aluminium clad layer thickness is in the range of 40 to 80 micron. The aluminium core sheet has a thickness typically in a range of at most 5 mm, more preferably in the range of 0.1 to 2 mm.

Preferably in the brazing product according to the invention the layer comprising nickel or nickel-alloy having 90% or more of nickel, e.g. Ni-Bi, has a thickness of at most 2.0µm, preferably at most 1.0µm, and more preferably in the range of 0.05 to 0.5µm. A coating thickness of more than 2.0µm requires a prolonged treatment time for plating, and may result in wrinkling of the molten filler metal during a subsequent brazing operation. A preferred minimum thickness for this nickel containing layer is about 0.25µm. Also other techniques such as roll bonding, dipping, thermal spraying, CVD, PVD or other techniques for depositing of metals or metal alloys from a gas or vapour phase may be used. Preferably the nickel comprising layer is essentially lead-free from an environmentally point of view.

In an embodiment the brazing product according to the invention is further characterised by a thin layer comprising zinc or tin as an intermediate bonding layer between said outer surface of said AlSi-alloy layer and said layer comprising nickel or nickel-alloy. With the zinc or tin comprising intermediate bonding layer a very effective bond between the AlSi-alloy layer and the layer comprising nickel is formed, the bond remaining effective during subsequent deformation of the brazing product, for example in a bending operation. The most suitable methods of applying such an intermediate layer of tin or zinc are by means of direct or immersion plating. Preferably the applied intermediate bonding layer comprising zinc or tin has a thickness of at most 0.5µm, more preferably at most 0.3µm (300nm), and most preferably in the range of 0.01 to 0.15µm (10-150nm). In the best results obtained a thickness of about 30nm has been used. A coating thickness of more than 0.5µm is thought to have no further advantages for improving the adhesion.

In a preferred embodiment the brazing product is elongated aluminium alloy stock, such as sheet, strip, wire or rod, resulting in e.g. brazing sheet products in accordance with the invention.

In a further aspect of the invention there is provided a method of manufacturing a brazed assembly using the brazing product, and ideally a brazing sheet product, in accordance with the invention comprising the sequential process steps of:
(a) shaping parts of which at least one is made from brazing product according to the invention;
(b) assembling the parts into an assembly;
(c) brazing the assembly under a vacuum or in an inert atmosphere in the absence of a brazing-flux at elevated temperature, preferably at a temperature in the range of 490 to 600°C, for a period long enough for melting and spreading of the molten filler;
(d) cooling the brazed assembly to below 100°C, typically with a cooling rate of at least 20°C/min.

Depending upon the aluminium alloy of the core the process may include the further processing step (e) of ageing of the brazed and cooled assembly in order to optimise the mechanical and/or corrosion properties of the resultant assembly.

This achieves the effect that brazed assemblies can be provided having an improved corrosion resistance when measured in a SWAAT-test in accordance with ASTM G-85, and preferably having corrosion life of 12 days or more in a SWAAT-test without perforations in accordance with ASTM G-85.

In an embodiment of the method of manufacturing a brazed assembly in step (a) at least one of the parts to be joined by brazing is made of the brazing product in accordance with the invention set out above, ideally a brazing sheet product, and at least one other part is selected from the group consisting of titanium, plated or coated titanium, bronze, brass, stainless steel, plated or coated stainless steel, nickel, nickel-alloy, low-carbon steel, plated or coated low-carbon steel, high-strength steel, and plated or coated high-strength steel.

The invention further provides a brazed assembly manufactured in accordance with the invention described above and wherein the parts made from said brazing product have a corrosion life of 12 days or more in a SWAAT-test without perforations in accordance with ASTM G-85.

In its preferred embodiment the brazed assembly is a heat exchanger, typically for automotive applications, or a (solid) fuel cell.

### EXAMPLE

On a laboratory scale tests were carried out on aluminium brazing sheets manufactured from an AA3003 core alloy roll clad on both sides with an AA40455 clad alloy, and having a total thickness of 0.5 mm and a clad layer thickness of 50 microns on both sides. The composition of standard AA4045 is, in weight percent:

| | |
|---|---|
| Si | 9.0 - 11.0 |
| Fe | < 0.80 |
| Cu | < 0.30 |
| Mg | < 0.05 |
| Zn | < 0.10 |
| Ti | < 0.20 |
| others each < 0.05, total < 0.15 | |
| balance aluminium. | |

The following sequential pre-treatment steps have been used for each sample:-
- cleaning by immersion for 180 sec. at 50°C in ChemTec 30014 (a commercial available bath), followed by rinsing,
- alkaline etching for 20 sec. at 50°C in ChemTec 30203 (a commercial available bath), followed by rinsing,
- desmutting for 60 sec. at room temperature in an acidic oxidising solution, typically 50% nitric acid, followed by rinsing,
- zincate immersion using ChemTec 19023 (a commercial available zincate bath) for 60 sec. at room temperature resulting in a thin zinc layer having a thickness of about 30 nm and resulting in a Ni:Zn ratio of 10:<0.1 in the metal filler, followed by rinsing.

Following the pre-treatment one or two different layers of metal on both sides of the sheet material were applied by means of electroplating (see also Table 1),
The aqueous Ni-Bi plating bath has the composition of:

| | |
|---|---|
| nickel sulphate | 142 g/l |
| nickel chloride | 30 g/l |
| sodium citrate | 140 g/l |
| sodium gluconate | 30 g/l |
| ammonium sulphate | 34 g/l |
| bismuth ions | 0.5 g/l |

In one variant of the samples, an extra high Bi-content was added to the Ni-Bi layer by using the same Ni-Bi plating bath, but having a bismuth ions concentration of 7.0 g/l.

The composition of the tin plating bath was as follows:

| | |
|---|---|
| Tin 2+-ions | 26,1 g/l |
| Fe total | 15,5 g/l |
| sulphate | 5.2 g/l |
| PSA | 210 g/l |

"PSA" stands for Phenol Sulfonic Acid.

For the Cu-layer two different baths have been used, namely a sulphate bath and a pyrophosphate bath. The composition of the sulphate bath ("SUL") was Cu-sulphate 120 g/l and sulphuric acid (97%) 75 g/l. The composition of the pyrophosphate bath ("PYR") was as follows:

| | |
|---|---|
| Cu-pyrophosphate | 75 g/l |
| K-pyrophosphate | 300 g/l |
| ammonia (25%) | 3 g/l |
| citric acid | 11 g/l |

For the zinc plating bath the commercial available ENVIROZIN 120 (trade name) has been used, and having the following composition:

| | |
|---|---|
| zinc oxide | 15.0 g/l |
| sodium hydroxide | 130 g/l |
| conditioner (25472) | 30 ml/l |
| initial brightener (25453) | 6 ml/l |

The plated specimens have been tested for adhesion using the Erichsen dome test (5mm), and the T-bend test. A value assessment is then given to the adhesion where (-) = poor, (±) = fair, and (+) = good. The results obtained are summarised in Table 1.

Prior to the assessment of the post-braze corrosion resistance, the samples have been subjected to a simulated brazing cycle. The samples were heated under flowing nitrogen, with heating from room temperature to 580°C, dwell time at 580°C for 1 minute, cooling from 580°C to room temperature. All samples had a good or even excellent brazeability. Following the brazing cycle either two or three samples of each type of plated brazing sheet have been tested in a SWAAT until the first perforations expressed in days of testing appear according to ASTM G-85, and the individual results are given in Table 1. The samples having no perforations after 21 days were taken out of the SWAAT box, and reported as ">21" in Table 1.

As a reference it is mentioned that typically aluminium brazing sheets manufactured from an AA3003 core alloy clad on both sides with an AA4045 clad alloy, and having a total thickness of 0.5 mm and a clad layer thickness of 50 microns each and devoid of any further metal layers have a SWAAT-test performance of more than 21 days without perforations.

From the results of Table 1 it can be seen that Sample 1 is a brazing product known from the prior art and having a layer comprising nickel with a small addition of bismuth as an alloying element. The SWAAT-test results for three samples tested are all 7 days before the perforations occur. By significantly increasing the Bi-level in the nickel layer, see Sample 2, the post-braze corrosion performance is significantly improved. Samples 3 and 4 have a first Ni-Bi layer similar to that of Sample 1, but these two samples have in addition a second thin electroplated layer of tin such that the mol-ratio Ni:Sn in the metal filler is 10:2 and 10:1 respectively. The addition of a small amount of tin to the metal filler remarkably results in an important improvement of the post-braze corrosion performance.

The application of a thin copper layer improves the corrosion performance of the brazing product, see e.g. Samples 6, 7, 9, 10 and 11. From Samples 10 and 11 it can be seen that the copper layer can be applied also underneath the nickel layer instead of on top of it. The use of copper does not necessarily always result in a better corrosion performance, see e.g. Sample 5. From Sample 8 it can be seen that too much copper will adversely affect the corrosion performance. From a comparison of Samples 7 and 9 it can be seen that the thin copper layer may be applied from different plating baths, while still resulting in similar corrosion performance.

From Samples 12 to 14 it can be seen that the application of a thin zinc layer, other than as a 30nm bonding layer, in various Ni:Zn ratio's result in an improved post-braze corrosion performance also.

Furthermore it can be seen from Table 1 that the application of an additional separate metal layer does not adversely affect the adhesion of the nickel layer, or any of the other applied metal layers.

**Table 1**

| **Sample** | **Composition first layer [g/m² ]** | | **Composition second layer [g/m² ]** | | **Mol-ratio Ni : element** | **Adhesion** | **SWAAT** |
|---|---|---|---|---|---|---|---|
| 1. | Ni 3.7 | Bi 0.09 | -- | | Ni : Bi = 10 : 0.07 | + | 7,7,7 |
| 2. | Ni 3.49 | Bi 1.59 | -- | | Ni : Bi = 10 : 1.3 | + | 12, 14, 21 |
| 3. | Ni 3.72 | Bi 0.09 | Sn | 1.84 | Ni : Sn = 10 : 2.6 | + | 19, >21, >21 |
| 4. | Ni 3.75 | Bi 0.09 | Sn | 0.97 | Ni : Sn = 10 : 1.3 | + | 17, >21, >21 |
| 5. | Ni 3.46 | Bi 0.08 | Cu 4.49 (via SUL) | | Ni : Cu = 10 : 12 | + | 6, 7, 7 |
| 6. | Ni 3.43 | Bi 0.08 | Cu 1.15 (via SUL) | | Ni : Cu = 10 : 3.1 | + | 14, 17, >21 |
| 7. | Ni 3.33 | Bi 0.08 | Cu 0.63 (via SUL) | | Ni : Cu = 10 : 1.7 | + | >21,>21,>21 |
| 8. | Ni 3.39 | Bi 0.09 | Cu 32.8 (via PYR) | | Ni : Cu = 10 : 90 | + | 3, 3, 7 |
| 9. | Ni 3.64 | Bi 0.09 | Cu 0.66 (via PYR) | | Ni : Cu = 10 : 1.7 | + | 17, >21 |
| 10.* | Cu 1.27 | (via PYR) | Ni 3.66 | Bi 0.08 | Ni : Cu = 10 : 3.2 | + | 11, 13, 14 |
| 11.* | Cu 0.59 | (via PYR) | Ni 3.43 | Bi 0.08 | Ni : Cu = 10 : 1.6 | + | 17, 11 |
| 12. | Zn 3.72 | | Ni 3.34 | Bi 0.10 | Ni : Zn = 10 : 10 | + | 10, 10, 11 |
| 13. | Zn 0.91 | | Ni 3.73 | Bi 0.11 | Ni : Zn = 10 : 2.2 | + | 10, 17, >21 |
| 14. | Zn 0.53 | | Ni 3.65 | Bi 0.11 | Ni : Zn = 10 : 1.3 | + | 10, 17 |

| | | | | | | | |
|---|---|---|---|---|---|---|---|
| *out of the claimed scope | | | | | | | |

## Claims

1. A brazing product comprising, an aluminium layer made of an aluminium alloy comprising silicon in an amount in the range of 2 to 18% by weight, and a layer comprising nickel on the outer surface of said aluminium layer which together said aluminium layer and all layers exterior thereto form a filler metal for a brazing operation, **characterised in that** the filler metal has a composition containing at least one element selected from the group consisting of tin, bismuth, zinc, silver, indium, lead, antimony, magnesium, cadmium and gallium, the at least one element having a smaller exchange current density for the Hydrogen Evolution Reaction than nickel, and whereby the mol-ratio of Ni to the total of all said at least one element is in the range of 10:(0.3 to 30).

2. A brazing product according to claim 1, wherein there is provided a separately applied layer comprising said at least one element in an amount such that in the filler metal the mol-ratio of Ni to said at least one element is in the range of 10:(0.3 to 30).

3. A brazing product according to claim 2, wherein the separately applied layer is a layer applied via a technique selected from the group consisting of roll bonding, thermal dipping, plating, electroplating, thermal spraying, plasma spraying, chemical vapour deposition, and physical vapour deposition.

4. A brazing product according to claim 2 or 3, wherein the separately applied layer comprises tin in an amount such that in the filler metal the mol-ratio of Ni:Sn is in the range of 10:(0.5 to 9).

5. A brazing product according claim 2 or 3, wherein the separately applied layer comprises zinc in an amount such that in the filler metal the mol-ratio of Ni:Zn is in the range of 10:(0.5 to 15), preferably in the range of 10:(0.5 to 8).

6. A brazing product according to any one of claims 1 to 5, wherein the brazing product is elongated aluminium alloy stock, and wherein preferably the elongated aluminium alloy stock is a member of the group consisting of sheet and strip.

7. A brazing product according to claim 6, wherein the brazing product is a brazing sheet product comprising a core sheet made of an aluminium alloy coupled to at least one surface of said core to an aluminium clad layer, the aluminium clad layer being made of an aluminium alloy comprising silicon in an amount in the range of 2 to 18% by weight, and a layer comprising nickel on the outer surface of said aluminium clad layer such that taken together said aluminium clad layer and all layers exterior thereto form the filler metal for a brazing operation.

8. A brazing product according to claim 7, wherein the aluminium clad layer comprises the at least one element selected from at least one member of the group consisting of tin, bismuth, zinc, silver, indium, lead, antimony, magnesium, cadmium, and gallium.

9. A brazing product according to any one of claims 6 to 8, wherein there is a layer comprising zinc or tin as an intermediate bonding layer between said outer surface of said aluminium layer comprising silicon in the range of 2 to 18% and said layer comprising nickel and having a thickness of less than 1 micron.

10. A brazing product according to any one of claims 1 to 9, wherein the layer comprising nickel has a thickness of at most 2.µm, and preferably of at most 1.0µm.

11. A brazing product according to any one of claims 1 to 10, wherein the layer comprising nickel is a layer applied via a technique selected from the group consisting of roll bonding, plating, electroplating, thermal spraying, chemical vapour deposition, and physical vapour deposition.

12. A brazing product according to any one of claims 1 to 11, wherein the layer comprising nickel is essentially lead-free.

13. A brazing product according to any one of claims 1 to 12, wherein the brazing product has a post- braze corrosion life of 8 days or more, and preferably of 12 days or more, in a SWAAT-test without perforations in accordance with ASTM G-85.

14. A brazing product comprising, an aluminium layer being made of an aluminium alloy comprising silicon in an amount in the range of 2 to 18% by weight, and a layer comprising nickel on the outer surface of said aluminium layer which together said aluminium layer and all layers exterior thereto form a filler metal for a brazing operation, **characterised in that** there is provided a separately applied layer comprising copper in an amount such that in the filler metal the mol-ratio of Ni:Cu is in the range of 10:(0.5 to 9).

15. Method of manufacturing an assembly of brazed components, comprising the steps of:-
(a) shaping parts of which at least one is made from the brazing product according to any one of claims 1 to 14;
(b) assembling the parts into an assembly;
(c) brazing the assembly under a vacuum or in an inert atmosphere in the absence of a brazing-flux at elevated temperature for a period long enough for melting and spreading of the molten filler metal;
(d) cooling the brazed assembly.

16. Method according to claim 15, wherein in step (a) at least one other of said parts comprises a material selected from the group consisting of titanium, plated or coated titanium, bronze, brass, stainless steel, plated or coated stainless steel, nickel, nickel-alloy, low-carbon steel, plated or coated low-carbon steel, high-strength steel, and plated or coated high-strength steel.

17. A brazed assembly manufactured in accordance with claim 15 or 16, and wherein the parts made from said brazing product have a post-braze corrosion life of 12 days or more in a SWAAT-test without perforations in accordance with ASTM G-85.

18. A brazed assembly manufactured in accordance with any one of claims 15 to 17, wherein the brazed assembly is a heat exchanger, preferably for automotive application.

19. A brazed assembly manufactured in accordance with any one of claims 15 to 17, wherein the brazed assembly is a fuel cell.

20. A brazed assembly manufactured in accordance with any one of claims 15 to 17, wherein the brazed assembly is a solid fuel cell.

## Patentansprüche

1. Hartlötprodukt, umfassend eine Aluminiumschicht bestehend aus einer Aluminiumlegierung, die Silicium in einer Menge im Bereich von 2 bis 18 Gew.-% umfasst, und eine Schicht, die auf der Außenfläche der Aluminiumschicht Nickel umfasst, wobei die Aluminiumschicht und alle dazu äußeren Schichten zusammen ein Metalllot für einen Hartlötvorgang bilden, **dadurch gekennzeichnet, dass** das Metalllot eine Zusammensetzung aufweist, die wenigstens ein Element enthält, das aus der Gruppe bestehend aus Zinn, Bismut, Zink, Silber, Indium, Blei, Antimon, Magnesium, Cadmium und Gallium ausgewählt ist, wobei das wenigstens eine Element eine niedrigere Austauschstromdichte für die Wasserstoffentwicklungsreaktion als Nickel besitzt, und wobei das Molverhältnis von Ni zur Gesamtheit aller der wenigstens einen Elemente im Bereich von 10:(0,3 bis 30) liegt.

2. Hartlötprodukt nach Anspruch 1, wobei eine separat aufgebrachte Schicht vorgesehen ist, die das wenigstens eine Element in einer solchen Menge enthält, dass in dem Metalllot das Molverhältnis von Ni zu dem wenigstens einen Element im Bereich von 10:(0,3 bis 30) liegt.

3. Hartlötprodukt nach Anspruch 2, wobei die separat aufgebrachte Schicht eine Schicht ist, die mittels einer Technik aufgebracht wird, die aus der Gruppe bestehend aus Walzverbinden, thermischem Tauchen, Plattieren, Galvanisieren bzw. Elektroplattieren, thermischem Spritzen, Plasmaspritzen, Abscheidung aus der Gasphase und Abscheidung aus der Dampfphase ausgewählt ist.

4. Hartlötprodukt nach Anspruch 2 oder 3, wobei die separat aufgebrachte Schicht Zinn in einer solchen Menge umfasst, dass in dem Metalllot das Molverhältnis von Ni:Sn im Bereich von 10:(0,5 bis 9) liegt.

5. Hartlötprodukt nach Anspruch 2 oder 3, wobei die separat aufgebrachte Schicht Zink in einer solchen Menge umfasst, dass in dem Metalllot das Molverhältnis von Ni:Zn im Bereich von 10:(0,5 bis 15) liegt, bevorzugt im Bereich von 10:(0,5 bis 8).

6. Hartlötprodukt nach einem der Ansprüche 1 bis 5, wobei das Hartlötprodukt gestrecktes bzw. längliches Aluminiumlegierungsausgangsmaterial ist, und wobei das längliche Aluminiumlegierungsausgangsmaterial bevorzugt ein Teil aus der Gruppe bestehend aus Blechen und Streifen ist.

7. Hartlötprodukt nach Anspruch 6, wobei das Hartlötprodukt ein Hartlötblechprodukt ist, umfassend ein Kernblech hergestellt aus einer Aluminiumlegierung, die an wenigstens einer Seite bzw. Fläche des Kerns an eine Aluminiumplattierschicht gekoppelt ist, wobei die Aluminiumplattierschicht aus einer Aluminiumlegierung besteht, die Silicium in einer Menge im Bereich von 2 bis 18 Gew.-% umfasst, und eine Schicht, die Nickel auf der Außenfläche der Aluminiumplattierschicht umfasst, so dass die Aluminiumplattierschicht und alle hierzu äußeren Schichten zusammengenommen das Metalllot für einen Hartlötvorgang bilden.

8. Hartlötprodukt nach Anspruch 7, wobei die Aluminiumplattierschicht das wenigstens eine Element umfasst, das aus wenigstens einem Element bzw. Mitglied der Gruppe bestehend aus Zinn, Bismut, Zink, Silber, Indium, Blei, Antimon, Magnesium, Cadmium und Gallium ausgewählt ist.

9. Hartlötprodukt nach einem der Ansprüche 6 bis 8, wobei eine Schicht vorliegt, die Zink oder Zinn als eine dazwischenliegende Bindeschicht zwischen der Außenfläche der Aluminiumschicht, die Silicium im Bereich von 2 bis 18% enthält, und der Schicht, die Nickel umfasst und eine Dicke von weniger als 1 µm hat enthält.

10. Hartlötprodukt nach einem der Ansprüche 1 bis 9, wobei die Nickel umfassende Schicht eine Dicke von höchstens 2,0 µm, und bevorzugt höchstens 1,0 µm hat.

11. Hartlötprodukt nach einem der Ansprüche 1 bis 10, wobei die Nickel umfassende Schicht eine Schicht ist, die mittels einer Technik aufgebracht wird, die aus der Gruppe bestehend aus Walzverbinden, Plattieren, Elektroplattieren, thermischem Spritzen, Abscheidung aus der Gasphase und Abscheidung aus der Dampfphase ausgewählt ist.

12. Hartlötprodukt nach einem der Ansprüche 1 bis 11, wobei die Nickel umfassende Schicht im Wesentlichen bleifrei ist.

13. Hartlötprodukt nach einem der Ansprüche 1 bis 12, wobei das Hartlötprodukt eine Korrosionslebensdauer nach dem Hartlöten von 8 Tagen oder mehr, und bevorzugt 12 Tagen oder mehr, in einem SWAAT-Test ohne Perforierungen gemäß ASTM G-85 hat.

14. Hartlötprodukt, umfassend eine Aluminiumschicht bestehend aus einer Aluminiumlegierung, die Silicium in einer Menge im Bereich von 2 bis 18 Gew.-% umfasst, und eine Schicht, die Nickel auf der Außenfläche der Aluminiumschicht umfasst, wobei die Aluminiumschicht und alle dazu äußeren Schichten zusammen ein Metalllot für einen Hartlötvorgang bilden, **dadurch gekennzeichnet, dass** eine separat aufgebrachte Schicht vorgesehen ist, die Kupfer in einer solchen Menge enthält, dass in dem Metalllot das Molverhältnis von Ni:Cu im Bereich von 10:(0,5 bis 9) liegt.

15. Verfahren zur Herstellung einer Anordnung aus hartgelöteten Bauteilen, umfassend die Schritte:
(a) Ausformen bzw. Ausgestalten von Teilen, von denen wenigstens eines aus dem Hartlötprodukt gemäß einem der Ansprüche 1 bis 14 besteht,
(b) Anordnen der Teile zu einer Anordnung,
(c) Hartlöten der Anordnung unter einem Vakuum oder einer Schutzgasatmosphäre in Abwesenheit eines Hartlötflussmittels bei erhöhter Temperatur über einen Zeitraum, der ausreicht, um das Metalllot zu schmelzen und um das geschmolzene Metalllot zu verteilen,
(d) Kühlen der hartgelöteten Anordnung.

16. Verfahren nach Anspruch 15, wobei in Schritt (a) wenigstens ein anderes der Teile ein Material umfasst, das aus der Gruppe bestehend aus Titan, plattiertem oder beschichtetem Titan, Bronze, Messing, rostfreiem Stahl, plattiertem oder beschichtetem rostfreiem Stahl, Nickel, Nickellegierung, kohlenstoffarmem Stahl, plattiertem oder beschichtetem kohlenstoffarmen Stahl, hochfestem Stahl und plattiertem oder beschichtetem hochfesten Stahl ausgewählt ist.

17. Hartlötanordnung, hergestellt gemäß Anspruch 15 oder 16, und wobei die aus dem Hartlötprodukt hergestellten Teile eine Korrosionslebensdauer nach dem Hartlöten von 12 Tagen oder mehr in einem SWAAT-Test ohne Perforierungen gemäß ASTM G-85 haben.

18. Hartlötanordnung, hergestellt gemäß einem der Ansprüche 15 bis 17, wobei die hartgelötete Anordnung ein Wärmetauscher ist, bevorzugt zur Anwendung in einem Fahrzeug.

19. Hartlötanordnung, hergestellt gemäß einem der Ansprüche 15 bis 17, wobei die hartgelötete Anordnung eine Brennstofifzelle ist.

20. Hartlötanordnung, hergestellt gemäß einem der Ansprüche 15 bis 17, wobei die hartgelötete Anordnung eine Festbrennstoffzelle ist.

## Revendications

1. Produit de brasage comprenant une couche d'aluminium réalisée en alliage d'aluminium comprenant du silicium dans une quantité dans la plage de 2 a 18 % en poids, et une couche comprenant du nickel sur la surface extérieure de ladite couche d'aluminium et qui, ensemble avec ladite couche d'aluminium et toutes les couches à l'extérieur de celle-ci, forme un métal de remplissage pour une opération de brasage, **caractérisé en ce que** le métal de remplissage a une composition contenant au moins un élément choisi parmi le groupe constitué de étain, bismuth, zinc, argent, indium, plomb, antimoine, magnésium, cadmium et gallium, ledit au moins un élément ayant une densité de courant d'échange pour la réaction dite "Hydrogen Evolution Reaction" (réaction d'évolution hydrogène) plus faible que le nickel, et dans lequel le rapport molaire de Ni sur le total dudit au moins un élément est dans la plage de 10:(0,3 à 30).

2. Produit de brasage selon la revendication 1, dans lequel il est prévu une couche appliquée séparément, comprenant ledit au moins un élément dans une quantité telle que, dans le métal de remplissage, le rapport molaire de Ni sur ledit au moins un élément est dans la plage de 10:(0,3 à 30).

3. Produit de brasage selon la revendication 2, dans lequel la couche appliquée séparément est une couche appliquée via une technique choisie parmi le groupe comprenant l'application par galetage, trempage thermique, placage, électroplacage, pulvérisation thermique, pulvérisation au plasma, déposition chimique en phase vapeur, et déposition physique en phase vapeur.

4. Produit de brasage selon la revendication 2 ou 3, dans lequel la couche appliquée séparément comprend de l'étain dans une quantité telle que, dans le métal de remplissage, le rapport molaire Ni:Sn est dans la plage de 10:(0,5 à 9).

5. Produit de brasage selon la revendication 2 ou 3, dans lequel la couche appliquée séparément comprend du zinc dans une quantité telle que, dans le métal de remplissage, le rapport molaire Ni:Zn est dans la plage de 10:(0,5 à 15), de préférence dans la plage de 10:(0,5 à 8).

6. Produit de brasage selon l'une quelconque des revendications 1 à 5, dans lequel le produit de brasage est un produit standard en alliage d'aluminium allongé, et dans lequel de préférence le produit standard en alliage d'aluminium allongé est un élément du groupe constitué par les tôles et les rubans.

7. Produit de brasage selon la revendication 6, dans lequel le produit de brasage est un produit en tôle de brasage comprenant une tôle d'âme réalisée en alliage d'aluminium et couplée à au moins une surface de ladite âme sur une couche de revêtement en aluminium, la couche de revêtement en aluminium étant réalisée en alliage d'aluminium comprenant du silicium dans une quantité dans la plage de 2 à 18 % en poids, et une couche comprenant du nickel sur la surface extérieure de ladite couche de revêtement en aluminium de telle sorte que, prises ensemble, ladite couche de revêtement en aluminium et toutes les couches à l'extérieur de celle-ci forment le métal de remplissage pour une opération de brasage.

8. Produit de brasage selon la revendication 7, dans lequel la couche de revêtement en aluminium comprend ledit au moins un élément choisi parmi le groupe constitué de étain, bismuth, zinc, argent, indium, plomb, antimoine, magnésium, cadmium, et gallium.

9. Produit de brasage selon l'une quelconque des revendications 6 à 8, dans lequel il est prévu une couche comprenant du zinc ou de l'étain à titre de couche de collage intermédiaire entre ladite surface extérieure de ladite couche d'aluminium comprenant du silicium dans la plage de 2 à 18 % et ladite couche comprenant du nickel et ayant une épaisseur inférieure à 1 micron.

10. Produit de brasage selon l'une quelconque des revendications 1 à 9, dans laquelle la couche comprenant du nickel a une épaisseur au maximum de 2,0 µm, et de préférence au maximum 1,0 µm.

11. Produit de brasage selon l'une quelconque des revendications 1 à 10, dans lequel la couche comprenant du nickel est une couche appliquée via une technique choisie parmi le groupe comprenant l'application par galetage, placage, électroplacage, pulvérisation thermique, déposition chimique en phase vapeur, et déposition physique en phase vapeur.

12. Produit de brasage selon l'une quelconque des revendications 1 à 11, dans lequel la couche comprenant du nickel est essentiellement exempte de plomb.

13. Produit de brasage selon l'une quelconque des revendications 1 à 12, dans lequel le produit de brasage présente une durée de corrosion post-brasage de 8 jours ou plus, et de préférence de 12 jours ou plus, dans un test SWAAT sans perforations conformément à la norme ASTM G-85.

14. Produit de brasage comprenant une couche d'aluminium réalisée en alliage d'aluminium comprenant du silicium dans une quantité dans la plage de 2 à 18 % en poids, et une couche comprenant du nickel sur la surface extérieure de ladite couche d'aluminium et qui, ensemble avec ladite couche d'aluminium et toutes les couches à l'extérieur de celle-ci, forme un métal de remplissage pour une opération de brasage, **caractérisé en ce qu'**il est prévu une couche appliquée séparément comprenant du cuivre dans une quantité telle que, dans le métal de remplissage, le rapport molaire de Ni:Cu est dans la plage de 10:(0,5 à 9).

15. Procédé de fabrication d'un assemblage de composants brasées, comprenant les étapes consistant à :
(a) mettre en forme des pièces dont une au moins est réalisée avec le produit de brasage selon l'une quelconque des revendications 1 à 14 ;
(b) assembler les pièces en un assemblage ;
(c) braser l'assemblage sous vide ou sous une atmosphère inerte en l'absence de flux de brasage à température élevée pendant une période suffisamment longue pour mettre en fusion et faire étaler le métal de remplissage fondu ; et
(d) faire refroidir l'assemblage brasé.

16. Procédé selon la revendication 15, dans lequel, dans l'étape (a), au moins une autre desdites pièces comprend un matériau choisi parmi le groupe comprenant titane, titane plaqué ou revêtu, bronze, laiton, acier inoxydable, acier inoxydable plaqué ou revêtu, nickel, alliage de nickel, acier à faible carbone, acier à faible carbone plaqué ou revêtu, acier à haute résistance, et acier à haute résistance plaqué ou revêtu.

17. Assemblage brasé fabriqué conformément au procédé de la revendication 15 ou 16, et dans lequel les pièces réalisées à partir dudit produit de brasage ont une durée de corrosion post-brasage de 12 jours ou plus dans un test SWAAT sans perforations conformément à la norme ASTM G-85.

18. Assemblage brasé fabriqué conformément à l'une quelconque des revendications 15 à 17, dans lequel l'assemblage brasé est un échangeur de chaleur, de préférence pour application automobile.

19. Assemblage brasé fabriqué conformément à l'une quelconque des revendications 15 à 17, dans lequel l'assemblage brasé est une pile à combustible.

20. Assemblage brasé fabriqué conformément à l'une quelconque des revendications 15 à 17, dans lequel l'assemblage brasé est une pile à combustible solide.
